# EUROPEAN PATENT APPLICATION

(11) **EP 4 195 819 A1**
(43) Date of publication of application: **14.06.2023**
(21) Application number: 20948841.0
(22) Date of filing: 06.08.2020
(51) Int. Cl.: H04W 72/04, H04W 72/12

(54) **TERMINAL**

(71) Applicant: NTT DOCOMO, INC., Tokyo 100-6150 (JP)
(72) Inventor: KURITA Daisuke, Tokyo 100-6150 (JP); HARADA Hiroki, Tokyo 100-6150 (JP)
(74) Representative: Hoffmann Eitle
(86) International application number: PCT/JP2020/030260
(87) International publication number: WO 2022/029973

(57) **Abstract**

Provided is a terminal including: a transmission unit that transmits an uplink signal using an uplink channel; and a reception unit that receives downlink control information including an information element that indicates a time domain resource allocation for the uplink channel, wherein the transmission unit transmits the uplink signal using a resource that extends over consecutive slots, based on the downlink control information.

## Description

### Technical Field

The present disclosure relates to a terminal that performs radio communication, and more particularly to a terminal that transmits an uplink signal using an uplink channel.

### Background Art

The 3rd Generation Partnership Project (3GPP) specifies the 5th generation mobile communication system (also called 5G, New Radio (NR), or Next Generation (NG)) and is also preparing a next generation specifications called Beyond 5G, 5G Evolution, or 6G.

Release 15 and Release 16 (NR) of the 3GPP specify operations in a band including multiple frequency ranges, specifically FR1 (410 MHz to 7.125 GHz) and FR2 (24.25 GHz to 52.6 GHz).

Release 17 of the 3GPP has discussed coverage enhancement in FR1 and FR2 (Non-Patent Literature 1). A corresponding improvement in channel quality is desirable for a PUSCH (Physical Uplink Shared Channel), a PUSCH (Physical Uplink Shared Channel), a PDCCH (Physical Downlink Control Channel), a PUCCH (Physical Uplink Control Channel), and the like.

### Citation List

### Non-Patent Literature

Non-Patent Literature 1: "New SID on NR coverage enhancement", RP-193240, 3GPP TSG RAN Meeting #86, 3GPP, December 2019

### Summary of the Invention

Incidentally, a possible TDD pattern is "DDDSU" or the like. "D" means a slot used only for a downlink symbol (hereinafter, D slot), "U" means a slot used only for an uplink symbol (hereinafter, U slot), and "S" means a slot used for downlink and uplink symbols (hereinafter, S slot).

Assuming the above-described TDD pattern, there may be a case where a resource (symbols) to which a PUSCH can be allocated extends over consecutive slots. Meanwhile, a resource that can be allocated using one DCI (Downlink Control Information) is defined in units of slots.

After diligent studies, the inventors have discovered the possibility of improving PUSCH channel quality, based on the finding that it is possible to make use of the case where a resource (symbols) to which a PUSCH can be allocated extends over consecutive slots.

Therefore, the following disclosure has been made in view of such circumstances, and an object of the disclosure is to provide a terminal capable of improving channel quality.

The present disclosure is a terminal including a transmission unit that transmits an uplink signal using an uplink channel, and a reception unit that receives downlink control information including an information element that indicates a time domain resource allocation for the uplink channel, wherein the transmission unit transmits the uplink signal using a resource that extends over consecutive slots, based on the downlink control information.

### Brief Description of Drawings

[FIG. 1] FIG. 1 is an overall schematic diagram of a radio communication system 10.
[FIG. 2] FIG. 2 is a diagram illustrating frequency ranges used in the radio communication system 10.
[FIG. 3] FIG. 3 is a diagram illustrating a configuration example of a radio frame, subframes, and slots used in the radio communication system 10.
[FIG. 4] FIG. 4 is a functional block configuration diagram of a UE 200.
[FIG. 5] FIG. 5 is a diagram for illustrating specific transmission.
[FIG. 6] FIG. 6 is a diagram illustrating an operation example.
[FIG. 7] FIG. 7 is a diagram for illustrating a PUSCH mapping type according to modified example 1.
[FIG. 8] FIG. 8 is a diagram for illustrating DM-RS positions according to modified example 2.
[FIG. 9] FIG. 9 is a diagram for illustrating DM-RS positions according to modified example 2.
[FIG. 10] FIG. 10 is a diagram illustrating an operation example according to modified example 3.
[FIG. 11] FIG. 11 is a diagram illustrating an example of a PUSCH-Config information element (ASN. 1 format).
[FIG. 12] FIG. 12 is a diagram illustrating an operation example according to modified example 5.
[FIG. 13] FIG. 13 is a diagram illustrating an example of a hardware configuration of the UE 200.

### Description of Embodiments

Embodiments will be described below with reference to the accompanying drawings. Note that the same or similar reference numerals have been attached to the same functions and configurations, and the description thereof is omitted as appropriate.

### [Embodiments]

### (1) Overall schematic configuration of the radio communication system

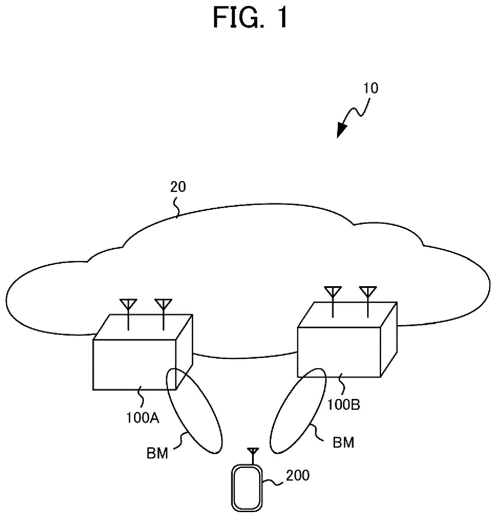

FIG. 1 is an overall schematic configuration diagram of a radio communication system 10 according to an embodiment. The radio communication system 10 is a 5G New Radio (NR) compliant radio communication system and includes a Next Generation-Radio Access Network 20 (hereinafter, NG-RAN 20) and a terminal 200 (hereinafter, UE 200).

The radio communication system 10 may be compliant with a system called Beyond 5G, 5G Evolution, or 6G.

The NG-RAN 20 includes a radio base station 100A (hereinafter, gNB 100A) and a radio base station 100B (hereinafter, gNB 100B). The specific configuration of the radio communication system 10 including the number of gNBs and UEs is not limited to the example in FIG. 1.

The NG-RAN 20 actually includes a plurality of NG-RAN Nodes, specifically gNBs (or ng-eNBs), and is connected to a 5G-compliant core network (5GC, not illustrated). The NG-RAN 20 and 5GC may be expressed simply as a "network".

The gNB 100A and gNB 100B are radio base stations in accordance with 5G and execute radio communication according to the UE 200 and 5G. The gNB 100A, gNB 100B, and UE 200 can support Massive MIMO (Multiple-Input Multiple-Output) generating a beam BM having higher directivity by controlling radio signals transmitted from a plurality of antenna elements, Carrier Aggregation (CA) bundling and using a plurality of Component Carriers (CCs), and Dual Connectivity (DC) performing simultaneous communication with two or more transport blocks between the UE and each of the two NG-RAN Nodes.

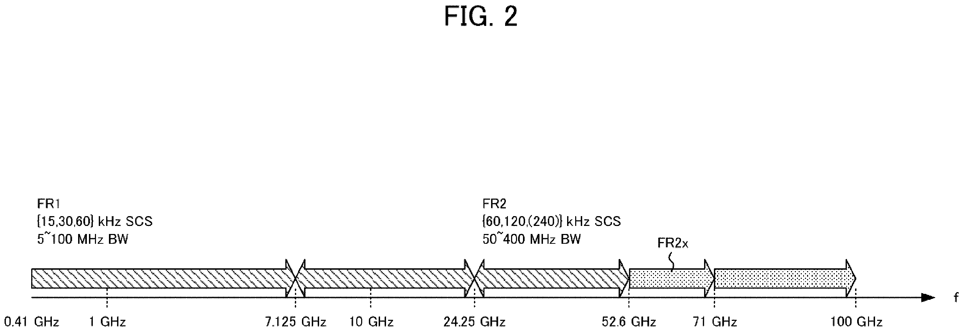

The radio communication system 10 supports a plurality of frequency ranges (FRs). Fig. 2 illustrates frequency ranges used in the radio communication system 10.

As illustrated in Fig. 2, the radio communication system 10 supports FR1 and FR2. The frequency bands of each FR are as follows.
▪ FR1: 410 MHz to 7.125 GHz
▪ FR2: 24.25 GHz to 52.6 GHz

FR1 may use a SubCarrier Spacing (SCS) of 15, 30, or 60 kHz and a bandwidth (BW) of 5 to 100 MHz. FR2 has a higher frequency than FR1 and may use an SCS of 60 or 120 kHz (240 kHz may be included) and a bandwidth (BW) of 50 to 400 MHz.

The SCS may be interpreted as numerology. Numerology is defined in 3GPP TS38.300 and corresponds to one SubCarrier Spacing in the frequency domain.

The radio communication system 10 supports a frequency band higher than that of FR 2. Specifically, the radio communication system 10 supports a frequency band above 52.6 GHz and up to 114.25 GHz. Such a high frequency band may be called "FR2x" for convenience.

When a band above 52.6 GHz is used in response to the above issue, Cyclic Prefix-Orthologonal Frequency Division Multiplexing (CP-OFDM) / Discrete Fourier Transform-Spread (DFT-S-OFDM) having a larger SubCarrier Spacing (SCS) may be applied.

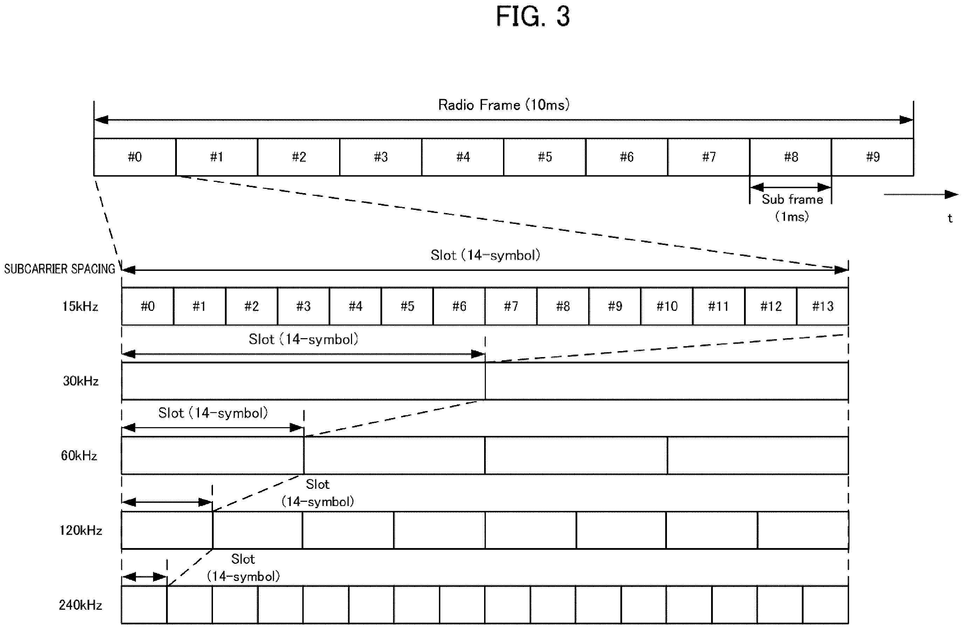

Fig. 3 illustrates a configuration example of a radio frame, subframes, and slots used in the radio communication system 10.

As illustrated in Fig. 3, one slot consists of 14 symbols, and the symbol length (and the slot length) gets shorter as the SCS gets larger (wider). The SCS is not limited to the spacing (frequencies) in Fig. 3. For example, 480 kHz, 960 kHz, and the like may be used.

The number of symbols constituting one slot does not necessarily have to be 14 (it may be 28 or 56 symbols). The number of slots per subframe may differ depending on the SCS.

A time direction (t) in Fig. 3 may be referred to as a time domain, a symbol length, or a symbol time. A frequency direction may be referred to as a frequency domain, a resource block, a subcarrier, or a bandwidth part (BWP).

A DMRS is a type of reference signal and is prepared for various channels. Here, unless otherwise noted, a DMRS may refer to one for a downlink data channel, specifically, a PDSCH (Physical Downlink Shared Channel). However, a DMRS for an uplink data channel, specifically for a PUSCH (Physical Uplink Shared Channel), may be interpreted in the same manner as a DMRS for a PDSCH.

The DMRS can be used for channel estimation in a device, for example, in the UE 200 as part of coherent demodulation. The DMRS may exist only in a resource block (RB) used for a PDSCH transmission.

The DMRS may have multiple mapping types. Specifically, the DMRS has mapping type A and mapping type B. In mapping type A, the first DMRS is arranged on the second or third symbol of a slot. In mapping type A, the DMRS may be mapped relative to slot boundaries regardless of where in the slot the actual data transmission begins. The reason why the first DMRS is arranged on the second or third symbol of the slot may be interpreted as to arrange the first DMRS after control resource sets (CORESET).

In mapping type B, the first DMRS may be arranged on the first symbol in data allocation. That is, the position of the DMRS may be assigned relative to where data is allocated, not relative to slot boundaries.

The DMRS may have multiple types. Specifically, the DMRS has Type 1 and Type 2. Type 1 and Type 2 differ in mapping in the frequency domain and the maximum number of orthogonal reference signals. Type 1 can output up to four orthogonal signals with a single-symbol DMRS, while Type 2 can output up to eight orthogonal signals with a double-symbol DMRS.

### (2) Functional block configuration of the radio communication system

Next, a functional block configuration of the radio communication system 10 will be described. Specifically, a functional block configuration of the UE 200 will be described.

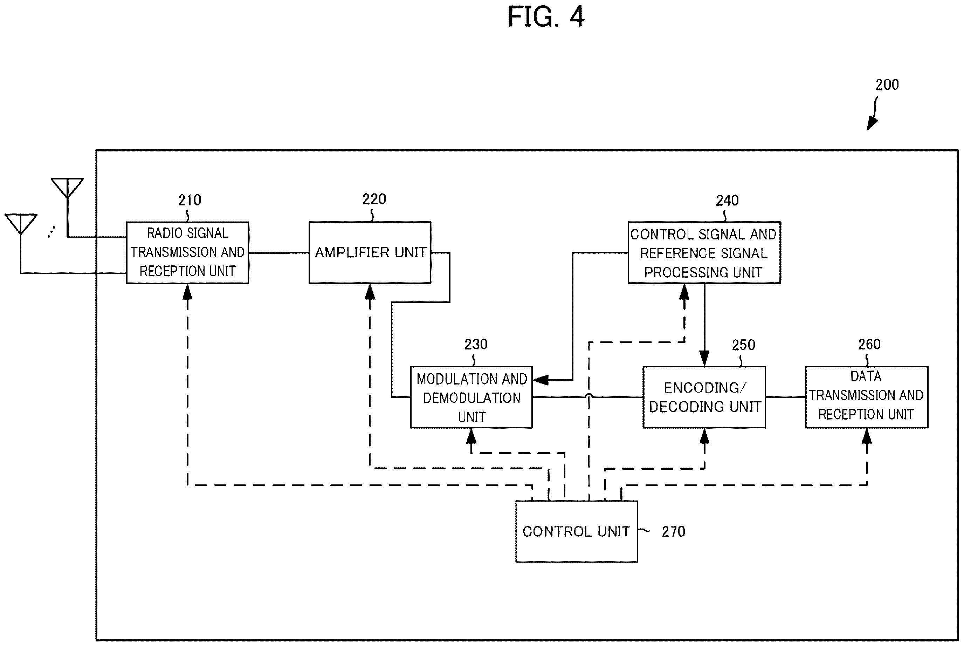

FIG. 4 is a functional block configuration diagram of the UE 200. As illustrated in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives radio signals in accordance with NR. The radio signal transmission and reception unit 210 supports Massive MIMO, CA bundling and using multiple CCs, and DC performing simultaneous communication between the UE and each of the two NG-RAN Nodes.

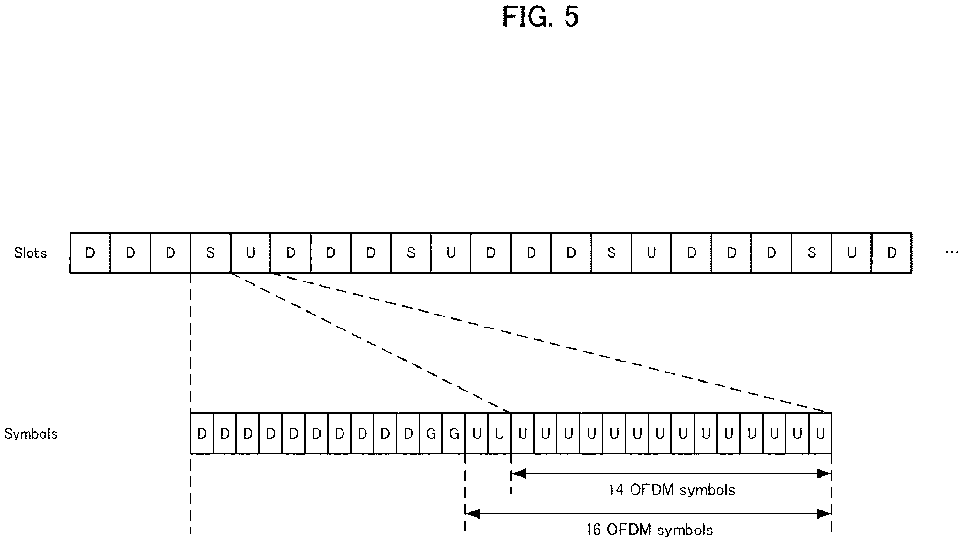

In the embodiment, the radio signal transmission and reception unit 210 includes a transmission unit that transmits an uplink signal using an uplink channel. The radio signal transmission and reception unit 210 transmits an uplink signal based on downlink control information (DCI described below) using a resource (symbols) that extends over consecutive slots. The following describes a case where the uplink channel is a PUSCH. The details of repetition transmission will be described below (see Fig. 5).

The amplifier unit 220 includes a PA (Power Amplifier) / an LNA (Low Noise Amplifier), or the like. The amplifier unit 220 amplifies the signal output from the modulation and demodulation unit 230 to a predetermined power level. The amplifier unit 220 also amplifies the RF signal output from the radio signal transmission and reception unit 210.

The modulation and demodulation unit 230 performs data modulation/demodulation, transmission power setting, resource block allocation, and the like for each predetermined communication destination (gNB 100 or other gNB). In the modulation and demodulation unit 230, Cyclic Prefix-Orthogonal Frequency Division Multiplexing (CP-OFDM) or Discrete Fourier Transform-Spread (DFT-S-OFDM) may be applied. DFT-S-OFDM may also be used for a downlink (DL) as well as an uplink (UL).

The control signal and reference signal processing unit 240 performs processing regarding various control signals transmitted and received by the UE 200 and processing regarding various reference signals transmitted and received by the UE 200.

Specifically, the control signal and reference signal processing unit 240 receives various control signals transmitted from the gNB 100 via a predetermined control channel, for example, a control signal of a Radio Resource Control (RRC) layer. The control signal and reference signal processing unit 240 transmits various control signals to the gNB 100 through a predetermined control channel.

The control signal and reference signal processing unit 240 performs processing using a reference signal (RS) such as a Demodulation Reference Signal (DMRS) and a Phase Tracking Reference Signal (PTRS).

A DMRS is a terminal-specific reference signal (pilot signal) known between a base station and a terminal for estimating a fading channel used for data demodulation. A PTRS is a terminal-specific reference signal for the purpose of estimating phase noise, which becomes an issue in a high frequency band.

The reference signal includes a Channel State Information-Reference Signal (CSI-RS), a Sounding Reference Signal (SRS), and a Positioning Reference Signal (PRS) for location information, in addition to the DMRS and PTRS.

The channel includes a control channel and a data channel. The control channel includes a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI), a Physical Broadcast Channel (PBCH), and the like.

The data channel includes a PDSCH (Physical Downlink Shared Channel), a PUSCH (Physical Uplink Shared Channel), and the like. Data here means data that is transmitted over a data channel. The data channel may be substituted with a shared channel.

Here, the control signal and reference signal processing unit 240 includes a receiving unit that receives downlink control information (DCI). The DCI includes existing fields to store DCI Formats, a Carrier indicator (CI), a BWP indicator, an FDRA (Frequency Domain Resource Allocation), a TDRA (Time Domain Resource Allocation), an MCS (Modulation and Coding Scheme), an HPN (HARQ Process Number), an NDI (New Data Indicator), an RV (Redundancy Version), and the like.

A value stored in a DCI Format field is an information element that specifies a format of the DCI. A value stored in a CI field is an information element that specifies a CC to which the DCI is applied. A value stored in a BWP indicator field is an information element that specifies a BWP to which the DCI is applied. The BWP that can be specified by the BWP indicator is set based on an information element (BandwidtPart-Config) included in an RRC message. A value stored in an FDRA field is an information element that specifies a frequency domain resource to which the DCI is applied. The frequency domain resource is identified based on a value stored in the FDRA field and an information element (RA Type) included in the RRC message. A value stored in a TDRA field is an information element that specifies a time domain resource to which the DCI is applied. The time domain resource is identified based on a value stored in the TDRA field and an information element (pdsch-TimeDomainAllocationList, pusch-TimeDomainAllocationList) included in the RRC message. The time domain resource may be identified based on a value stored in the TDRA field and a default table. A value stored in an MCS field is an information element that specifies an MCS to which the DCI is applied. The MCS is identified based on a value stored in the MCS and an MCS table. The MCS table may be specified based on the RRC message, or identified based on RNTI scrambling. A value stored in an HPN field is an information element that specifies an HARQ Process to which the DCI is applied. A value stored in the NDI is an information element to identify whether data to which the DCI is applied is new transmission data. A value stored in an RV field is an information element that specifies the redundancy of data to which the DCI is applied.

In the embodiment, the DCI includes a Time Domain Resource Allocation (TDRA) for an uplink channel (PUSCH). The DCI including a TDRA for a PUSCH may be a DCI of Format 0_0, Format 0_1, or Format 0_2.

The encoding/decoding unit 250 performs data division/connection, channel coding/decoding, and the like for each predetermined communication destination (gNB 100 or other gNB).

Specifically, the encoding/decoding unit 250 divides the data output from the data transmission and reception unit 260 into predetermined sizes and performs channel coding on the divided data. The encoding/decoding unit 250 also decodes the data output from the modulation and demodulation unit 230 and connects the decoded data.

The data transmission and reception unit 260 performs transmitting and receiving protocol data units (PDU) and service data units (SDU). Specifically, the data transmission and reception unit 260 performs assembly, disassembly, and the like of PDUs/SDUs in a plurality of layers (medium access control (MAC) layer, radio link control (RLC) layer, packet data convergence protocol (PDCP) layer, and the like). The data transmission and reception unit 260 also performs error correction and retransmission control of data based on a hybrid automatic repeat request (ARQ).

The control unit 270 controls each of the functional blocks configuring the UE 200. In particular, in the embodiment, the control unit 270 controls transmission (hereinafter, specific transmission) of an uplink signal using a resource (symbols) that extends over consecutive slots. The details of the specific transmission will be described below (see Fig. 5).

### (3) Specific transmission

Specific transmission will be described below. Here, a case where the TDD pattern is "DDDSU" will be described. "D" means a slot used only for a downlink symbol (hereinafter, D slot), "U" means a slot used only for an uplink symbol (hereinafter, U slot), and "S" means a slot used for downlink and uplink symbols (hereinafter, S slot).

Described is a case where one slot includes 14 symbols. "D" means a symbol used for a downlink (hereinafter, D symbol), "U" means a symbol used for an uplink (hereinafter, U symbol), and "G" means a guard symbol (hereinafter, G symbol).

As illustrated in Fig. 5, in the embodiment, attention is paid to a case where an S slot and a U slot are consecutive and the last two symbols of the S slot are U symbols. That is, attention is paid to a case where 16 U symbols are consecutive.

In the existing specification, the unit of resource allocation based on one DCI is one slot, and no consideration has been given to allocating a PUSCH to 16 consecutive U symbols based on one DCI. A possible way to treat the 16 consecutive U symbols as one pseudo unit is to use repetition Type B as a repetition type for a PUSCH, but this is not desirable for the following reasons. Specifically, for example, when repetition transmission is applied 8 times to 2 symbols, the coding rate becomes 7 times larger (14/2) compared with a case where 14 symbols are allocated to a PUSCH, and PUSCH channel characteristics are not sufficiently obtained at a cell edge and the like. Further, DMRS mapping is required for repetition transmission each time, which reduces resources available to be allocated to a PUSCH.

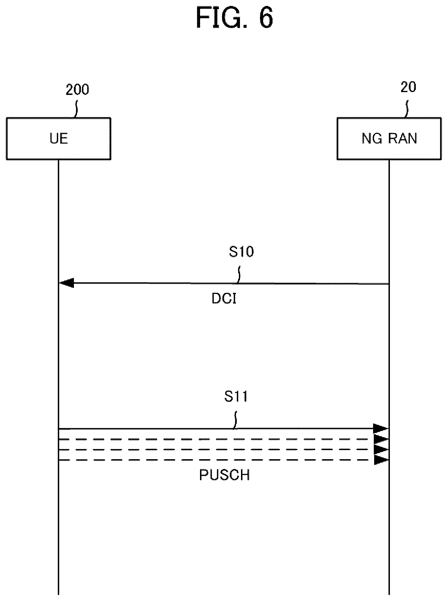

In contrast, by newly introducing the concept of "a transmission of an uplink signal using a resource (symbols) that extends over consecutive slots", the embodiment allows U symbols extending over consecutive slots to be allocated to a PUSCH, based on one DCI. For example, as illustrated in Fig. 6, the unit of resource allocation based on one DCI is extended to "16 OFDM symbols (U symbols)".

Further, in specific transmission, restrictions may be set on a resource available to be allocated to a PUSCH. A restriction may be to determine the number of consecutive slots (n) as a predetermined number (for example, n = 2). A restriction may be to determine the maximum number of consecutive slots. A restriction may be to determine the starting position (S) of symbols that can be allocated to a PUSCH, as a predetermined position (for example, S = 12, 13 only). A restriction may be to determine the number of symbols (L) that can be allocated to a PUSCH, as a predetermined range (for example, 16 ≤ L ≤ 20). A restriction may be to determine the number of symbols (L) that can be allocated to a PUSCH, as a predetermined number (for example, L = 16, 18, 20).

### (4) Operation example

An operation example according to the embodiment will be described below.

As illustrated in Fig. 6, in step S10, the UE 200 receives a DCI from the NG-RAN 20. The DCI includes a TDRA and the like.

In step S11, the UE 200 performs transmission (specific transmission) of an uplink signal using a resource (symbols) that extends over consecutive slots. The above-described restrictions may be set in such specific transmission. Note that the UE 200 may perform repetitive transmission of an uplink signal using a PUSCH.

### (5) Action and effect

In the embodiment, by extending a unit of resource allocation based on one DCI to "U symbols extending over consecutive slots", it is possible to effectively use the U symbols extending over consecutive slots as a resource for a PUSCH while suppressing the rise in the coding rate and the decrease in resources that can be allocated to a PUSCH. It is thus possible to realize PUSCH coverage enhancement.

### [Modified example 1]

Modified example 1 of the embodiment will be described below. Differences from the embodiment will be mainly described below.

Modified example 1 describes a case where a specific mapping type (for example, Type C) used for allocating a resource that extends over consecutive slots is defined as a PUSCH mapping type.

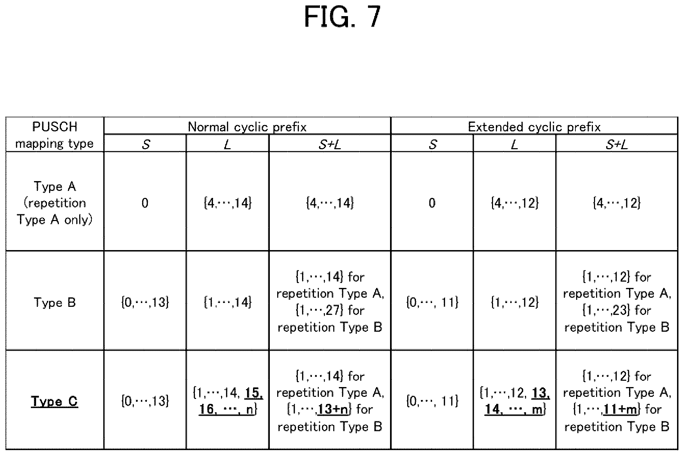

Specifically, as illustrated in Fig. 7, the PUSCH mapping type defines the starting position (S) of symbols that can be allocated to a PUSCH and the number of symbols (L) that can be allocated to a PUSCH. The PUSCH mapping type may be defined by S + L. Values of S, L, and S + L may be determined for each CP (Cyclic Prefix) length. Values of S, L, and S + L may be defined for each PUSCH repetition type.

Existing PUSCH mapping types include Type A and Type B. Type A is used only for repetition Type A, and Type B is used for both repetition Type A and repetition Type A. In the existing Type A and Type B, the value of L does not exceed "14" because the allocation is considered in slot units (see section 6.1.2 of 3GPP TS38.214 V16.2.0).

In contrast, in the specific mapping type (Type C) newly defined for specific transmission, the value of L is defined in such a way that it can take a value greater than "14". For example, in Type C as applied to a normal cyclic prefix, the value of L can be 15, 16, ..., n, and the like. Similarly, in Type C as applied to an extended cyclic prefix, the value of L can be 15, 16, ..., m, and the like. Note that n and m are natural numbers greater than 16, and n and m may be the same value or different values. It should be noted that the range of possible values of S + L has also changed along with such an extension.

Note that the PUSCH mapping type and values such as S and L may be specified by a TDRA included in a DCI. The values specifying S and L may be referred to as SLIV (Start and Length Indicator Value). The table in Fig. 6 may be a predetermined table.

### [Modified example 2]

Modified example 2 of the embodiment will be described below. Differences from the embodiment will be mainly described below.

Modified example 2 describes a case where specific mapping positions used for allocation of a resource that extends over consecutive slots are defined as mapping positions for a Demodulation Reference Signal (hereinafter, DMRS) of an uplink channel.

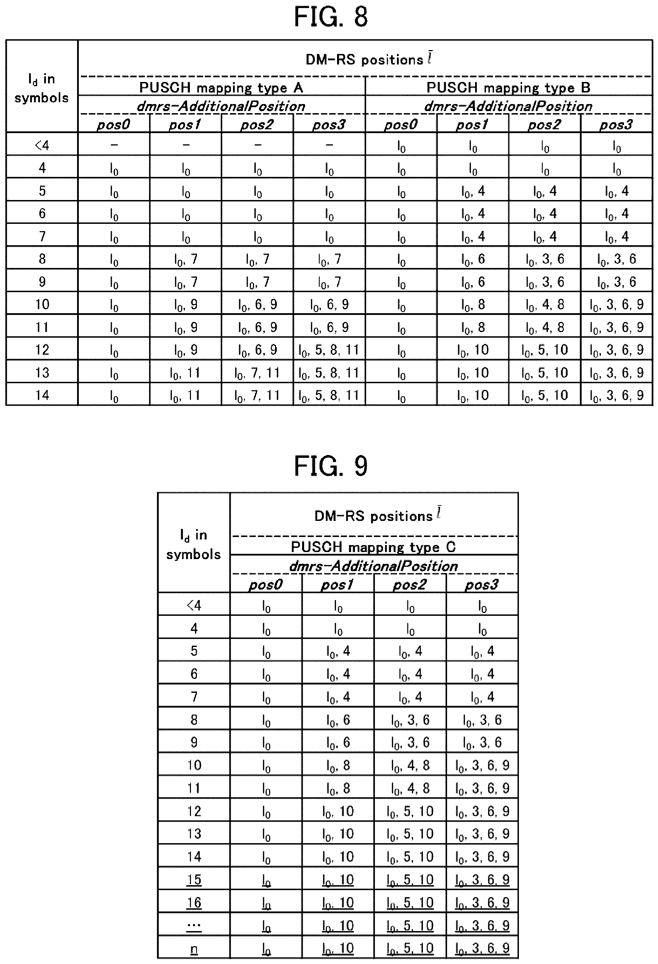

Specifically, as illustrated in Fig. 8, DMRS mapping positions (in Fig. 7, DM-RS positions) are determined for each PUSCH mapping type described in modified example 1. Note that when the PUSCH mapping type is Type A, the value of l_{d} may be the interval between the first symbol and the last symbol of symbols to which a PUSCH resource is allocated in a slot. When the PUSCH mapping type is Type B, the value of l_{d} may be the interval of a PUSCH resource scheduled in a case where intra-slot frequency hopping is not used, or the interval per hop in a case where intra-slot frequency hopping is used. When the PUSCH mapping type is Type A, the value of lo may be determined using a higher layer parameter (dmpr-TypeA-Position). When the PUSCH mapping type is Type B, the value of lo may be a predetermined value (for example, "0"). As illustrated in Fig. 8, the value of l_{d} does not exceed "14" because allocation per slot is considered in DMRS mapping positions defined for each existing PUSCH mapping type (see section 6.4.1.1.3 of 3GPP TS38.211 V16.2.0).

In contrast, as illustrated in Fig. 9, at specific mapping positions newly defined for specific transmission, the value of l_{d} is determined in such a way that it can be a value greater than "14". Specific mapping positions may be associated with Type C described in modified example 1. The method of determining l_{d} and lo may be similar to an existing method.

Note that fixed values other than lo in the table in Fig. 9 (for example, "4" in the line with l_{d} = 4, "3" or "6" in the line with l_{d} = 8, etc.) may be the same as fixed values other than lo in the table in Fig. 8 or may be different from the fixed values other than lo in the table in Fig. 8. The number of dmrs-AdditionalPosition (pos0 to pos3) in the table in Fig. 9 is the same as the number of dmrs-AdditionalPosition ("4") in the table in Fig. 8. However, considering the extension of the number of symbols treated as a unit, the number of dmrs-AdditionalPosition in the table in Fig. 9 may be greater than the number of dmrs-AdditionalPosition in the table in Fig. 8.

### [Modified example 3]

Modified example 3 of the embodiment will be described below. Differences from the embodiment will be mainly described below.

Modified example 3 describes a case where the specific mapping type (for example, Type C) described in modified example 1 is explicitly set by the NG-RAN 20. Specifically, the UE 200 receives a message including an information element that indicates setting of a specific mapping type. The information element may be included in a PUSCH-Config information element. The information element is a newly defined information element and may be referred to as "drms-UplinkForPUSCH-mappingTypeC".

### (1) Operation example

An operation example of modified example 3 will be described below.

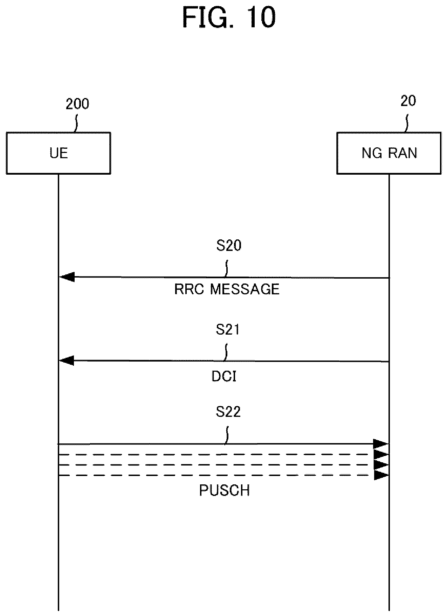

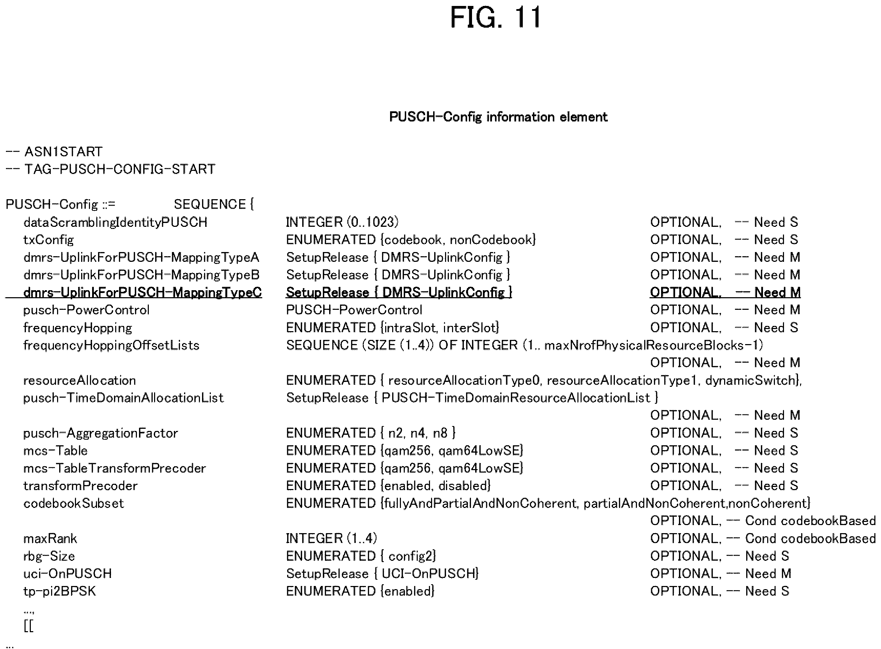

As illustrated in Fig. 10, in step S20, the UE 200 receives an RRC message. The RRC message includes drms-UplinkForPUSCH-mappingTypeC that indicates setting of a specific mapping type (for example, Type C). As illustrated in Fig. 11, drms-UplinkForPUSCH-mappingTypeC may be an extension IE of PUSCH-Config information.

In step S21, the UE 200 receives a DCI from the NG-RAN 20. The DCI includes a TDRA and the like.

In step S22, the UE 200 performs transmission (specific transmission) of an uplink signal using a resource (symbols) that extends over consecutive slots. The above-described restrictions may be set in such specific transmission. The UE 200 may transmit a DRMS at specific mapping positions. Note that the UE 200 may perform repetitive transmission of an uplink signal using a PUSCH.

### [Modified example 4]

Modified example 4 of the embodiment will be described below. Differences from the embodiment will be mainly described below.

Modified example 4 describes a case where an extension is made to other processing along with the introduction of uplink signal transmission (specific transmission) using a resource (symbols) extending over consecutive slots, that is, the introduction of the specific mapping type (for example, Type C) described in modified example 1.

### (1) Repetition type

A new repetition type (for example, repetition Type C) corresponding to a specific mapping type may be introduced.

For example, repetition Type C may be explicitly set using an RRC message and the like. In repetition Type C, symbols that extend over consecutive slots may be used as one unit (repetition unit), and repetition transmission may be performed for each repetition unit. Symbol positions used for repetition transmission may be the same for each repetition unit. Such repetition Type C may be treated as an extension of repetition Type A. The number of times of repetition transmission for repetition Type C may be explicitly set using a PUSCH-Config information element or the like, as with repetition Type A. In repetition Type C, slots used for repetition transmission may be explicitly set by means of the NG-RAN 20 or implicitly set by means of the NG-RAN 20. Slots used for repetition transmission may be predetermined according to TDD patterns.

In repetition Type C, repetition transmission may be performed using consecutive slots or using non-consecutive slots. In repetition Type C, repetition transmission may be performed using consecutive repetition units, or repetition transmission may be performed using non-consecutive repetition units.

Note that repetition transmission of an uplink signal using a PUSCH does not have to be applied to a specific mapping type.

### (2)Frequency hopping

New frequency hopping corresponding to a specific mapping type may be introduced.

New frequency hopping may be explicitly set using an RRC message and the like. The new frequency hopping may use frequency hopping (inter-slot or intra-slot) similar to that of repetition Type A. For inter-slot frequency hopping, parameters, such as the applicability of frequency hopping and a frequency offset value, may be explicitly set using a Config information element and the like. For intra-slot frequency hopping, parameters, such as the applicability of frequency hopping and a frequency offset value, may be explicitly set using a Config information element and the like. Symbol allocation similar to that of repetition Type A may be applied to intra-slot frequency hopping.

Note that frequency hopping does not have to be applied to a specific mapping type.

### [Modified example 5]

Modified example 5 of the embodiment will be described below. Differences from the embodiment will be mainly described below.

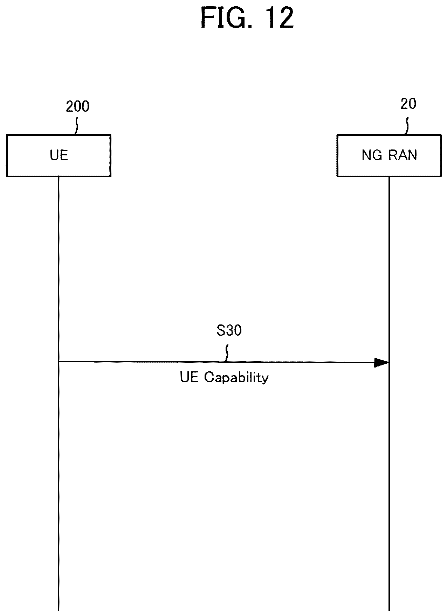

In modified example 5, the UE 200 transmits a message including an information element (hereinafter, UE capability) regarding a capability of allocating a resource that extends over consecutive slots (step S30 in Fig. 12). The UE capability may include the following information elements.

For example, the UE capability may include an information element that indicates availability of support for the above-described specific transmission. The UE capability may include an information element that indicates availability of support for a specific mapping type (for example, Type C). The UE capability may include an information element that indicates availability of support for newly defined processing (specific mapping positions, repetition Type C, and new frequency hopping) along with the introduction of a specific mapping type. Hereinafter, these information elements will be referred to as information elements indicating availability of support.

For example, the UE capability may include an information element that represents the availability of support for each frequency. Such an information element may include an information element specifying all frequencies, may include an information element indicating an individual frequency, or may include an information element indicating a frequency range (for example, FR1, FR2, and the like). The information element specifying all frequencies can represent the availability of support as the UE 200.

For example, the UE capability may include an information element that represents availability of support for each duplex system. Such an information element may include an information element specifying all of the duplex systems or may include an information element indicating an individual duplex system (TDD, FDD, and the like). The information element specifying all the duplex systems can represent the availability of support as the UE 200.

### [Other embodiments]

Although the contents of the present invention have been described in accordance with the embodiment, the present invention is not limited to the descriptions, and it is obvious to those skilled in the art that various modifications and improvements thereof are possible.

Although not specifically mentioned in the embodiment, in the above-described repetition Type B, when specific transmission (specific mapping type) is set, an extension may be implemented to change the handling of invalid symbols from "drop" to "shift". "Drop" means that an invalid symbol is counted as a PUSCH transmission occasion, and "shift" means that an invalid symbol is counted as a PUSCH transmission occasion. In such a case, S slots having a mixture of invalid and valid symbols may be counted as PUSCH transmission occasions.

In the embodiment, a PUSCH is exemplified as a channel to which specific transmission (specific mapping type) is applied. However, the embodiment is not limited to this. The embodiment can apply specific transmission (specific mapping type) as an extension of resource allocation to a channel where one slot is a unit for allocating resources based on one DCI. For example, a channel to which the specific transmission (specific mapping type) is applied may be a PUCCH.

Although not specifically mentioned in the embodiment, the UE 200 may receive a message including an information element that indicates whether or not to set up repetition transmission using non-consecutive specific slots. Such a message may be an RRC message.

The block diagram (FIG. 4) used in the description of the above-described embodiment shows blocks in units of functions. Those functional blocks (components) can be realized by a desired combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work is called a transmitting unit or a transmitter. For any of the above, as described above, the realization method is not particularly limited.

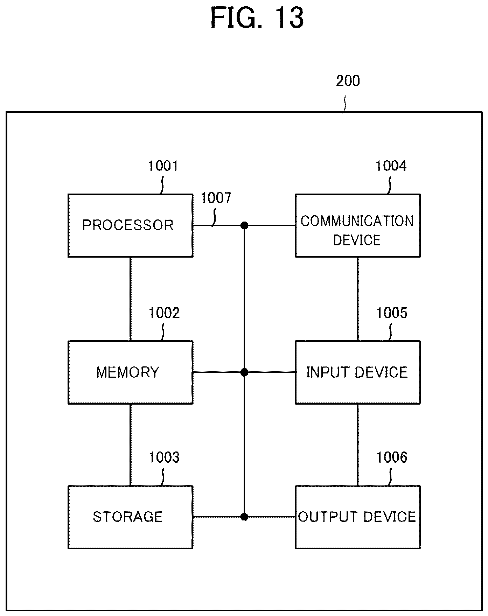

Further, the UE 200 (the device) described above may function as a computer that performs the processing of the radio communication method of the present disclosure. FIG. 13 is a diagram illustrating an example of a hardware configuration of the device. As illustrated in FIG. 13, the device may be configured as a computer device including a processor 1001, a memory 1002, a storage 1003, a communication device 1004, an input device 1005, an output device 1006, a bus 1007, and the like.

In the following description, the term "device" can be substituted with circuit, device, unit, or the like. A hardware configuration of the device may include one or plurality of the devices in the figure or may not include some of the devices.

Each of the functional blocks (see Fig. 4) of the device is implemented by means of any of hardware elements of the computer device or a combination of the hardware elements.

Each of the functions of the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a Central Processing Unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002 and executes various processes according to them. As the program, a program causing the computer to execute at least part of the operation described in the above embodiment is used. Further, various processes described above can be executed by one processor 1001 or can be executed simultaneously or sequentially by two or more processors 1001. The processor 1001 can be implemented by using one or more chips. The program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), or the like. The memory 1002 may store therein programs (program codes), software modules, and the like that can execute the method according to one embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, a Blu-ray (registered trademark) disk), a smart card, a flash memory (for example, a card, a stick, a key drive), a floppy (registered trademark) disk, a magnetic strip, and the like. The storage 1003 can be called an auxiliary storage device. The recording medium can be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also called, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with a bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI)), higher layer signaling (for example, RRC signaling, Medium Access Control (MAC) signaling), broadcast information (a Master Information Block (MIB), a System Information Block (SIB), other signals, or a combination thereof. The RRC signaling may also be referred to as an RRC message, for example, or may be an RRC Connection Setup message, an RRC Connection Reconfiguration message, or the like.

Each of the above aspects/embodiments can be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (Registered Trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, and a next-generation system that is expanded based on these. Further, a plurality of systems may be combined and applied (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps using an exemplary order and are not limited to the presented specific order.

The specific operation that is performed by a base station in the present disclosure may be performed by its upper node in some cases. In a network constituted by one or more of network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information can be stored in a specific location (for example, a memory) or can be managed in a management table. The information to be input/output can be overwritten, updated, or added to. The information can be deleted after outputting. The inputted information can be transmitted to another device.

A determination may be made by using a value (0 or 1) represented by one bit, by truth-value (Boolean: true or false), or by comparison of numerical values (for example, comparison with a predetermined value).

Each of the aspects/embodiments described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Whether referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instructions, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwaves, or the like), then at least one of these wired and wireless technologies is included within the definition of the transmission medium.

Information, signals, or the like described in the present invention may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or a desired combination thereof.

It should be noted that the terms described in the presnt disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure can be represented by an absolute value, can be represented by a relative value from a predetermined value, or can be represented by corresponding other information. For example, a radio resource can be indicated using an index.

Names used for the above parameters are not restrictive names in any respect. In addition, formulas and the like using these parameters may be different from those explicitly disclosed in the present disclosure. Because the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also called sectors). In a configuration in which a base station accommodates a plurality of cells, the entire coverage area of the base station can be divided into a plurality of smaller areas. In each such smaller area, a communication service can be provided by a base station subsystem (for example, a small base station for indoor use (Remote Radio Head: RRH)).

The term "cell" or "sector" refers to part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The mobile body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be substituted with a mobile station (user terminal, hereinafter the same). For example, each aspect/embodiment of the present disclosure may be applied to a configuration in which communication between a base station and a mobile station is replaced with communication between a plurality of mobile stations (for example, this may be called Device-to-Device (D2D), Vehicle-to-Everything (V2X), or the like). In this case, the mobile station may have the function of a base station. In addition, words such as "uplink" and "downlink" may also be substituted with words corresponding to inter-terminal communication (for example, "side"). For example, an uplink channel, a downlink channel, or the like may be substituted with a side channel.

Similarly, the mobile station in the present disclosure may be substituted with a base station. In this case, the base station may have the function of a mobile station.

A radio frame may be composed of one or more frames in the time domain. Each of one or more frames in the time domain may be referred to as a subframe.

A subframe may be further composed of one or more slots in the time domain. The subframe may have a fixed time length (for example, 1 ms) independent of the numerology.

Numerology may be a communication parameter applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, a specific filtering process performed by a transceiver in a frequency domain, and a specific windowing process performed by the transceiver in the time domain, and the like.

A slot may be composed of one or more symbols (Orthogonal Frequency Division Multiplexing (OFDM) symbols, Single Carrier Frequency Division Multiple Access (SC-FDMA) symbols, etc.) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a Transmission Time Interval (TTI), a plurality of consecutive subframes may be called a TTI, and one slot or one minislot may be called a TTI. That is, at least one of the subframe and TTI may be a subframe (1 ms) in the existing LTE, may be a period shorter than 1 ms (for example, 1-13 symbols), or may be a period longer than 1 ms. Note that, a unit representing a TTI may be called a slot, a minislot, or the like instead of a subframe.

Here, a TTI refers to the minimum time unit of scheduling in radio communication, for example. For example, in the LTE system, the base station performs scheduling for allocating radio resources (a frequency bandwidth, a transmission power, etc. that can be used in each user terminal) to each user terminal in units of TTI. The definition of a TTI is not limited to this.

A TTI may be a transmission time unit such as a channel-encoded data packet (transport block), a code block, or a code word, or may be a processing unit such as scheduling or link adaptation. When a TTI is given, a time interval (for example, the number of symbols) in which a transport block, a code block, a code word, etc. are actually mapped may be shorter than the TTI.

When one slot or one minislot is called a TTI, one or more TTIs (that is, one or more slots or one or more minislots) may be the minimum scheduling unit. The number of slots (minislot number) constituting the minimum time unit of the scheduling may be controlled.

A TTI having a time length of 1 ms may be referred to as a usual TTI (TTI in LTE Rel. 8-12), a normal TTI, a long TTI, a normal subframe, a normal subframe, a long subframe, a slot, and the like. A TTI shorter than a usual TTI may be referred to as a shortened TTI, a short TTI, a partial TTI (partial or fractional TTI), a shortened subframe, a short subframe, a minislot, a subslot, a slot, and the like.

In addition, long TTI (for example, usual TTI, subframe, etc.) may be substituted with a TTI having a time length exceeding 1 ms, and short TTI (for example, shortened TTI, etc.) may be substituted with a TTI having a TTI length of less than the TTI length of a long TTI and a TTI length of 1 ms or more.

A Resource Block (RB) is a resource allocation unit in the time domain and the frequency domain, and may include one or more consecutive subcarriers in the frequency domain. The number of subcarriers included in an RB may be the same regardless of numerology, and may be 12, for example. The number of subcarriers included in an RB may be determined based on the numerology.

Also, the time domain of an RB may include one or more symbols, and may have a length of one slot, one minislot, one subframe, or one TTI. Each TTI, subframe, etc. may be composed of one or more resource blocks.

Note that, one or more RBs may be called a physical resource block (PRB), a SubCarrier Group (SCG), a Resource Element Group (REG), a PRB pair, an RB pair, etc.

A resource block may be configured by one or more resource elements (RE). For example, one RE may be a radio resource domain of one subcarrier and one symbol.

A Bandwidth Part (BWP) (which may be called a partial bandwidth, etc.) may represent a subset of consecutive common resource blocks (RBs) for a certain numerology in a certain carrier. Here, a common RB may be specified by an index of an RB based on a common reference point of the carrier. A PRB may be defined in a certain BWP and numbered within that BWP.

A BWP may include a UL BWP and a DL BWP. One or more BWPs may be set in one carrier for a UE.

At least one of the configured BWPs may be active, and a UE does not have to expect to transmit and receive predetermined signals/channels outside the active BWP. Note that "cell", "carrier", and the like in this disclosure may be substituted with "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in an RB, and the number of symbols included in a TTI, a symbol length, and a Cyclic Prefix (CP) length can be changed in various manners.

The terms "connected", "coupled", or any variations thereof mean any direct or indirect connection or coupling between two or more elements, and can include that one or more intermediate elements may be present between two elements that are "connected" or "coupled" to each other. The coupling or connection between the elements may be physical, logical, or a combination thereof. For example, "connection" may be substituted with "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in a radio frequency region, a microwave region, a light (both visible and invisible) region, or the like.

A reference signal may be abbreviated as an RS and may be called a Pilot in accordance with applicable standards.

As used in the present disclosure, the phrase "based on" does not mean "based only on" unless explicitly stated otherwise. In other words, the phrase "based on" means both "based only on" and "based at least on".

"Means" in the configuration of each above device may be replaced with "unit", "circuit", "device", or the like.

Any reference to elements using a designation such as "first", "second", or the like used in the present disclosure generally does not limit the amount or order of those elements. Such designations can be used in the present disclosure as a convenient way to distinguish between two or more elements. Thus, reference to the first and second elements does not imply that only two elements can be adopted, or that the first element must precede the second element in some or other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" can include deeming that determining has been performed by, for example, judging, calculating, computing, processing, deriving, investigating, searching (looking up, search, inquiry (e.g., searching in a table, database, or another data structure), ascertaining, and the like. In addition, "determining" can include deeming that determining has been performed by receiving (for example, receiving information), transmitting (for example, transmitting information), inputting, outputting, accessing (e.g., accessing data in a memory), and the like. In addition, "determining" can include deeming that determining has been performed by resolving, selecting, choosing, establishing, comparing, and the like. That is, "determining" can include deeming that a "determining" regarding some action has been performed. Moreover, "determining" may be read as "assuming", "expecting", "considering", or the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10: Radio communication system
- 20: NG-RAN
- 100: gNB
- 200: UE
- 210: Radio signal transmission and reception unit
- 220: Amplifier unit
- 230: Modulation and demodulation unit
- 240: Control signal and reference signal processing unit
- 250: Encoding/decoding unit
- 260: Data transmission and reception unit
- 270: Control unit
- 1001: Processor
- 1002: Memory
- 1003: Storage
- 1004: Communication device
- 1005: Input device
- 1006: Output device
- 1007: Bus

## Claims

1. A terminal comprising:
a transmission unit that transmits an uplink signal using an uplink channel; and
a reception unit that receives downlink control information including an information element that indicates a time domain resource allocation for the uplink channel, wherein
the transmission unit transmits the uplink signal using a resource that extends over consecutive slots, based on the downlink control information.

2. The terminal according to claim 1, wherein
a specific mapping type used for allocating the resource that extends over the consecutive slots is defined as a mapping type for the uplink channel.

3. The terminal according to claim 2, wherein
the reception unit receives a message including an information element that indicates setting of the specific mapping type.

4. The terminal according to any one of claims 1 to 3, wherein
a specific mapping position used for allocating the resource that extends over the consecutive slots is defined as a mapping position of a demodulation reference signal for the uplink channel.

5. The terminal according to any one of claims 1 to 4, wherein
the transmission unit transmits a message including an information element regarding a capability of allocating the resource that extends over the consecutive slots.
